# EUROPEAN PATENT APPLICATION

(11) **EP 4 629 302 A1**
(43) Date of publication of application: **08.10.2025**
(21) Application number: 25161582.9
(22) Date of filing: 04.03.2025
(51) Int. Cl.: H01M 4/04

(54) **APPARATUS AND METHOD FOR PRESSING ELECTRODE PLATE**

(30) Priority: 02.04.2024 KR 20240044546
(71) Applicant: SAMSUNG SDI CO., LTD., Yongin-si, Gyeonggi-do 17084 (KR)
(72) Inventor: KIM, Yongsoo, Yongin-si, Gyeonggi-do 17084 (KR); CHAN, Hong, Yongin-si, Gyeonggi-do 17084 (KR); LEE, Jaewon, Yongin-si, Gyeonggi-do 17084 (KR); LEE, Hyerin, Yongin-si, Gyeonggi-do 17084 (KR); YOON, Kyungjun, Yongin-si, Gyeonggi-do 17084 (KR)
(74) Representative: Gulde & Partner

(57) **Abstract**

An apparatus for pressing an electrode plate (200) is provided. The electrode plate (200) includes a coating part (210) having an active material coated on one surface thereof and an uncoated part (220) without an active material coated thereon adjoining the coating part. The apparatus includes: a temperature detector (110) configured to detect a temperature of the uncoated part; an induction heating annealing, IHA, part (120) configured to perform IHA on the uncoated part so that the temperature of the uncoated part detected by the temperature detector (110) is maintained within a reference range of a reference temperature; and a pressing part configured to press the electrode plate (200) after the uncoated part has been heated by the IHA part (120).

## Description

### BACKGROUND

### 1. Field

Aspects of embodiments of the present disclosure relate to an apparatus and method for pressing an electrode plate.

### 2. Description of the Related Art

Different from primary batteries, which are not designed to be (re)charged, secondary batteries are designed to be discharged and recharged. Low-capacity secondary batteries are used in small portable electronic devices, such as smart phones, feature phones, notebook computers, digital cameras, and camcorders, while large-capacity secondary batteries are widely used as power sources for driving motors, such as of hybrid vehicles or electric vehicles, and for power storage.

Generally, a secondary battery may include an electrode assembly including a positive electrode and a negative electrode, a case that accommodates the electrode assembly, an electrode terminal connected to the electrode assembly, a vent for discharging a gas (also known as degassing) generated within the case, etc. The electrode assembly may be formed by winding or stacking a stacked arrangement including a positive electrode plate, a negative electrode plate, and a separator, each of which is formed in a plate or film shape. Each electrode plate of the secondary battery includes a coating part on which an active material having the ability to transmit electrons to a surface of a metal thin plate (or foil), such as aluminum or copper, has been coated and an uncoated part on which an active material has not been coated and which acts as a terminal part.

A polarity plate process for manufacturing an electrode plate is a process of manufacturing the positive electrode and the negative electrode included in the secondary battery, and includes (e.g., is divided into) mixing, coating, pressing, and slitting fixing processes. The electrode plate on which the coating process has been finished is compressed through a pressing process, thus improving battery efficiency. In the pressing process, the electrode plate may be broken due to a difference in pressure applied to the coating part and pressure applied to the uncoated part. To prevent such a breakage, an induction heating annealing (IHA) method may be used prior to the pressing process. Upon induction heating annealing (IHA), the foil is heated by forming a strong AC magnetic field. As temperature of the foil rises, the crystal size of the foil increases. Accordingly, in the pressing process, breakage of the electrode plate can be mitigated or prevented because the elongation rate of the foil is increased.

The above information disclosed in this Background section is for enhancement of understanding of the background of the present disclosure, and therefore, it may contain information that does not constitute related (or prior) art.

### SUMMARY

Generally, an output value and output location of an induction heating annealing (IHA) part that performs IHA on an electrode plate prior to pressing are fixed by a user's setting. Accordingly, the quality of an electrode plate that has undergone the pressing process may not be stable due to a fine (or small) movement of the electrode plate because the output value and output location of the IHA part cannot be changed during a subsequent process. Accordingly, embodiments of the present disclosure provide an electrode plate pressing structure that controls the location and output of IHA to perform the IHA on an uncoated part so that the temperature of the uncoated part of the electrode plate is maintained within a reference range of a reference temperature.

However, aspects and features of the present disclosure are not limited to the aspects and features described above, and other aspects and features not mentioned herein will be clearly understood by those skilled in the art from the description of the present disclosure below.

According to an embodiment of the present disclosure, an apparatus for pressing an electrode plate is provided. The electrode plate includes a coating part having an active material coated on one surface thereof and an uncoated part without an active material coated thereon adjoining the coating part. The apparatus includes a temperature detector configured to detect a temperature of the uncoated part, an induction heating annealing (IHA) part configured to perform IHA on the uncoated part so that the temperature of the uncoated part detected by the temperature detection part is maintained within a reference range of a reference temperature, and a pressing part configured to press the electrode plate after the uncoated part has been heated by the IHA part.

According to an embodiment, the IHA part may control a location and output of the IHA based on the temperature of the uncoated part as detected by the temperature detector.

According to an embodiment, the reference temperature is in a range of 25°C to 200°C.

According to an embodiment, the reference range of the reference temperature is ±3°C.

According to an embodiment, the temperature detector is arranged in a range of 10 mm to 20 mm in front of a location at where the IHA part performs the IHA in a direction in which the electrode plate is moved.

Furthermore, according to another embodiment of the present disclosure, a method of pressing an electrode plate for pressing an electrode plate is provided. The electrode plate includes a coating part having an active material coated on one surface thereof and an uncoated part without an active material coated thereon adjoining the coating part. The method includes detecting, by a temperature detector, a temperature of the uncoated part, performing, by an induction heating annealing (IHA) part, IHA on the uncoated part so that the temperature of the uncoated part detected by the temperature detector is maintained within a reference range of a reference temperature, and pressing, by a pressing part, the electrode plate after the uncoated part has been heated by the IHA part.

According to an embodiment, the performing the IHA comprises controlling, by the IHA part, a location and output of the IHA based on the temperature of the uncoated part detected by the temperature detector.

According to an embodiment, the performing the IHA comprises setting, by the IHA part, the reference temperature in a range of 25°C to 200°C.

According to an embodiment, the performing the IHA comprises setting, by the IHA part, the reference range of the reference temperature to be ±3°C.

According to an embodiment, the temperature detector is in a range of 10 mm to 20 mm in front of a location at where the IHA part performs the IHA in a direction in which the electrode plate is moved.

According to an embodiment of the present disclosure, the location and output of IHA are controlled to accurately perform IHA on the uncoated part so that the temperature of the uncoated part of the electrode plate is maintained within a reference range of a reference temperature. Accordingly, breakage of the electrode plate may be mitigated or prevented and stable quality ensured because the temperature of the uncoated part can be maintained in an optimal temperature range even if electrode plate moves.

Furthermore, according to embodiments of the present disclosure, by using the apparatus for pressing an electrode plate, good quality can be maintained although an output value of IHA is applied to various types of other pressing equipment because temperature data of foil of the electrode plate are secured.

However, aspects and features of the present disclosure which may be obtained in the present disclosure are not limited to the aforementioned aspects and features, and other aspects and features not described above may be evidently understood by those skilled in the art from the following description.

### BRIEF DESCRIPTION OF THE DRAWINGS

The following drawings attached to this specification illustrate embodiments of the present disclosure and provide further understand of the aspects and features of the present disclosure along with the aforementioned disclosure. Accordingly, the present disclosure should not be construed as being limited to the content described in such drawings.
FIG. 1 is a schematic diagram illustrating a cylindrical lithium secondary battery as an implementation example.
FIG. 2 is a schematic diagram illustrating a prismatic lithium secondary battery as an implementation example.
FIGS. 3 and 4 are schematic diagrams illustrating a pouch lithium secondary battery as an implementation example.
FIG. 5 illustrates temperature change of an uncoated part attributable to a fine movement of an electrode plate during induction heating annealing (IHA) by an apparatus for pressing an electrode plate.
FIG. 6 is a graph describing a change in the tensile strength of the uncoated part of the electrode plate according to a change in the location of IHA for the electrode plate.
FIG. 7 is a table and chart describing a change in the physical properties of the electrode plate according to temperature changes of the uncoated part of the electrode plate.
FIG. 8 is a diagram describing an apparatus for pressing an electrode plate according to an embodiment of the present disclosure.
FIG. 9 is a diagram describing a process of, by the apparatus for pressing an electrode plate according to an embodiment of the present disclosure, performing IHA.
FIG. 10 is a diagram illustrating a temperature detection part and IHA part of the apparatus for pressing an electrode plate according to an embodiment of the present disclosure.

### DETAILED DESCRIPTION

Hereinafter, embodiments of the present disclosure will be described with reference to the accompanying drawings. Unless otherwise defined, all terms (including technical and scientific terms) used herein have the same meaning as commonly understood by one of ordinary skill in the art to which the present disclosure belongs. It will be further understood that terms, such as those defined in commonly used dictionaries, should be interpreted as having a meaning that is consistent with their meaning in the context of the relevant art and/or the present specification and should not be interpreted in an idealized or overly formal sense unless expressly so defined herein.

Accordingly, it should be understood that there may be various equivalents and modifications that can replace or modify the embodiments described herein at the time of filing this application.

It will be understood that when an element or layer is referred to as being "on," "connected to," or "coupled to" another element or layer, it may be directly on, connected, or coupled to the other element or layer or one or more intervening elements or layers may also be present. When an element or layer is referred to as being "directly on," "directly connected to," or "directly coupled to" another element or layer, there are no intervening elements or layers present. For example, when a first element is described as being "coupled" or "connected" to a second element, the first element may be directly coupled or connected to the second element or the first element may be indirectly coupled or connected to the second element via one or more intervening elements.

In the figures, dimensions of the various elements, layers, etc. may be exaggerated for clarity of illustration. The same reference numerals designate the same elements. As used herein, the term "and/or" includes any and all combinations of one or more of the associated listed items. Further, the use of "may" when describing embodiments of the present disclosure relates to "one or more embodiments of the present disclosure." Expressions, such as "at least one of" and "any one of," when preceding a list of elements, modify the entire list of elements and do not modify the individual elements of the list. When phrases such as "at least one of A, B and C, "at least one of A, B or C," "at least one selected from a group of A, B and C," or "at least one selected from among A, B and C" are used to designate a list of elements A, B and C, the phrase may refer to any and all suitable combinations or a subset of A, B and C, such as A, B, C, A and B, A and C, B and C, or A and B and C. As used herein, the terms "use," "using," and "used" may be considered synonymous with the terms "utilize," "utilizing," and "utilized," respectively. As used herein, the terms "substantially," "about," and similar terms are used as terms of approximation and not as terms of degree, and are intended to account for the inherent variations in measured or calculated values that would be recognized by those of ordinary skill in the art.

It will be understood that, although the terms first, second, third, etc. may be used herein to describe various elements, components, regions, layers, and/or sections, these elements, components, regions, layers, and/or sections should not be limited by these terms. These terms are used to distinguish one element, component, region, layer, or section from another element, component, region, layer, or section. Thus, a first element, component, region, layer, or section discussed below could be termed a second element, component, region, layer, or section without departing from the teachings of example embodiments.

Spatially relative terms, such as "beneath," "below," "lower," "above," "upper," and the like, may be used herein for ease of description to describe one element or feature's relationship to another element(s) or feature(s) as illustrated in the figures. It will be understood that the spatially relative terms are intended to encompass different orientations of the device in use or operation in addition to the orientation depicted in the figures. For example, if the device in the figures is turned over, elements described as "below" or "beneath" other elements or features would then be oriented "above" or "over" the other elements or features. Thus, the term "below" may encompass both an orientation of above and below. The device may be otherwise oriented (rotated 90 degrees or at other orientations), and the spatially relative descriptors used herein should be interpreted accordingly.

The terminology used herein is for the purpose of describing embodiments of the present disclosure and is not intended to be limiting of the present disclosure. As used herein, the singular forms "a" and "an" are intended to include the plural forms as well, unless the context clearly indicates otherwise. It will be further understood that the terms "includes," "including," "comprises," and/or "comprising," when used in this specification, specify the presence of stated features, integers, steps, operations, elements, and/or components but do not preclude the presence or addition of one or more other features, integers, steps, operations, elements, components, and/or groups thereof.

Also, any numerical range disclosed and/or recited herein is intended to include all sub-ranges of the same numerical precision subsumed within the recited range. For example, a range of "1.0 to 10.0" is intended to include all subranges between (and including) the recited minimum value of 1.0 and the recited maximum value of 10.0, that is, having a minimum value equal to or greater than 1.0 and a maximum value equal to or less than 10.0, such as, for example, 2.4 to 7.6. Any maximum numerical limitation recited herein is intended to include all lower numerical limitations subsumed therein, and any minimum numerical limitation recited in this specification is intended to include all higher numerical limitations subsumed therein. Accordingly, Applicant reserves the right to amend this specification, including the claims, to expressly recite any sub-range subsumed within the ranges expressly recited herein.

References to two compared elements, features, etc. as being "the same" may mean that they are "substantially the same". Thus, the phrase "substantially the same" may include a case having a deviation that is considered low in the art, for example, a deviation of 5% or less. In addition, when a certain parameter is referred to as being uniform in a given region, it may mean that it is uniform in terms of an average.

The controller and/or any other relevant devices or components according to embodiments of the present disclosure described herein may be implemented utilizing any suitable hardware, firmware (e.g., an application-specific integrated circuit), software, and/or a suitable combination of software, firmware, and hardware. For example, the various components of the controller may be formed on one integrated circuit (IC) chip or on separate IC chips. Further, the various components of the controller may be implemented on a flexible printed circuit film, a tape carrier package (TCP), a printed circuit board (PCB), or formed on a same substrate as the controller. Further, the various components of the controller may be a process or thread, running on one or more processors, in one or more computing devices, executing computer program instructions and interacting with other system components for performing the various functionalities described herein. The computer program instructions are stored in a memory which may be implemented in a computing device using a standard memory device, such as, for example, a random access memory (RAM). The computer program instructions may also be stored in other non-transitory computer readable media such as, for example, a CD-ROM, flash drive, or the like. Also, a person of skill in the art should recognize that the functionality of various computing devices may be combined or integrated into a single computing device or the functionality of a particular computing device may be distributed across one or more other computing devices without departing from the scope of the exemplary embodiments of the present disclosure.

Throughout the specification, unless otherwise stated, each element may be singular or plural.

Arranging an arbitrary element "above (or below)" or "on (under)" another element may mean that the arbitrary element may be disposed in contact with the upper (or lower) surface of the element, and another element may also be interposed between the element and the arbitrary element disposed on (or under) the element.

Throughout the specification, when "A and/or B" is stated, it means A, B or A and B, unless otherwise stated. That is, "and/or" includes any or all combinations of a plurality of items enumerated. When "C to D" is stated, it means C or more and D or less, unless otherwise specified.

The terminology used herein is for the purpose of describing embodiments of the present disclosure and is not intended to limit the present disclosure.

Lithium secondary batteries may be classified as cylindrical type, prismatic type, pouch type, and coin type secondary batteries depending on their type (e.g., form factor). Prior to describing embodiments of the present disclosure, the cylindrical type, prismatic type, and pouch type secondary batteries are briefly described because the present disclosure may be primarily applied to the cylindrical type, prismatic type, and pouch type secondary batteries.

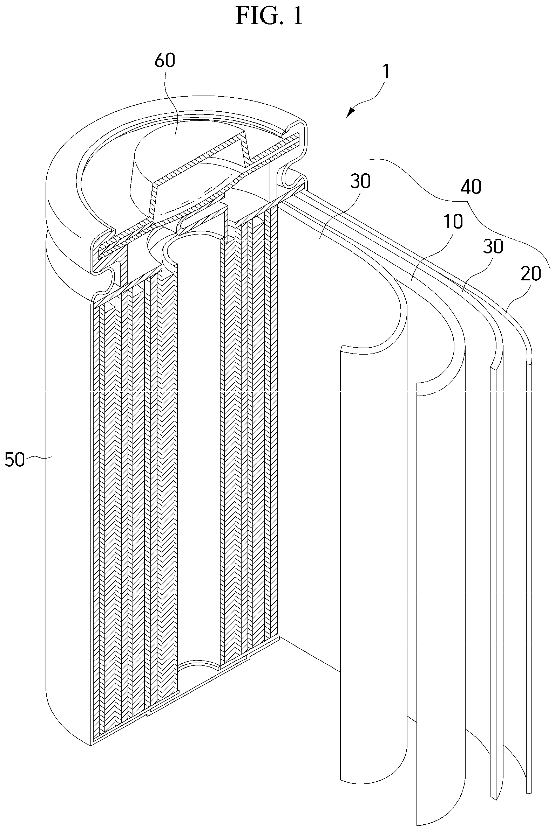

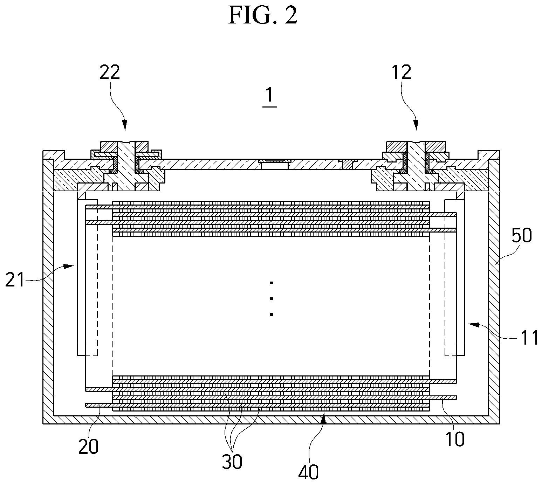

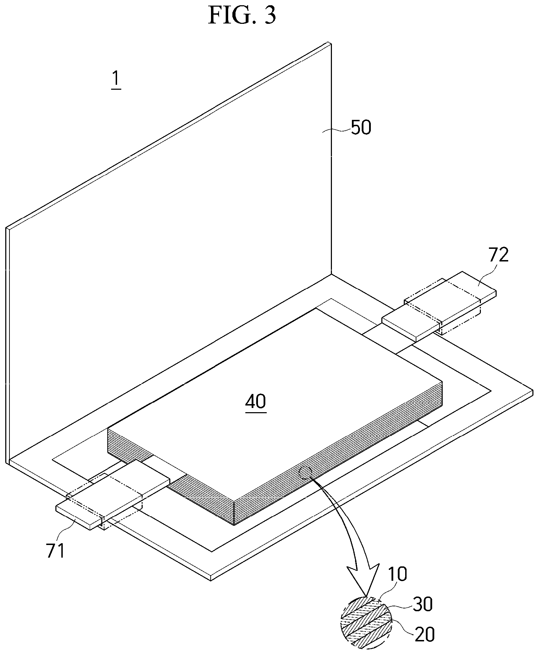

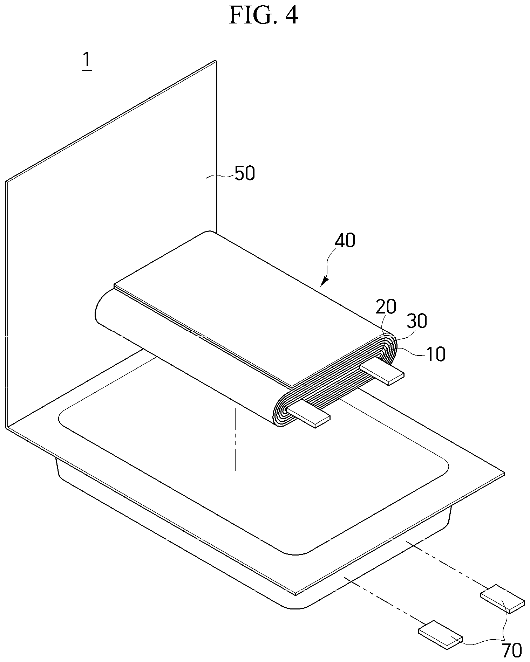

FIGS. 1 to 4 are schematic diagrams illustrating lithium secondary batteries as implementation examples. FIG. 1 illustrates a cylindrical lithium secondary battery. FIG. 2 illustrates a prismatic type secondary battery. FIGS. 3 and 4 illustrate a pouch type secondary battery. Referring to FIG. 1 to 4, a lithium secondary battery 1 may include an electrode assembly 40 in which a separator 30 has been interposed between a first electrode plate 10 and a second electrode plate 20 and a case 50 in which the electrode assembly 40 is accommodated. The first electrode plate 10, the second electrode plate 20, and the separator 30 may be impregnated in an electrolyte. As illustrated in FIG. 1, the lithium secondary battery 1 may include a sealing member 60 that seals the case 50. Furthermore, in FIG. 2, the lithium secondary battery 1 may include a first electrode lead tab 11, a first electrode terminal 12, a second electrode lead tab 21, and a second electrode terminal 22. As illustrated in FIGS. 3 and 4, the lithium secondary battery 1 may include an electrode tab 70 that acts as an electrical passage for moving a current formed in the electrode assembly 40 toward the outside, and may include, for example, a first electrode tab 71 and a second electrode tab 72.

The electrode assembly 40 may be formed by winding or stacking a stacked body including (e.g., a stacked arrangement of) the first electrode plate 10, the second electrode plate 20, and the separator 30, each of which is formed in a plate or film shape. In the winding stack body, the winding axis of the electrode assembly 40 may be parallel to the length direction of the case. Furthermore, the electrode assembly 40 may be the stack type, but a shape of the electrode assembly 40 is not limited in the present disclosure. The first electrode plate 10 of the electrode assembly 40 may act as a positive electrode, and the second electrode plate 20 thereof may act as a negative electrode, or vice versa.

The first electrode plate 10 may be formed by applying a first electrode active material, such as graphite or carbon, to a first electrode collector plate formed of a metal foil, such as copper, a copper alloy, nickel, or a nickel alloy, and may include a first electrode tab (e.g., a first uncoated part), that is, an area to which the first electrode active material has not been applied.

The second electrode plate 20 may be formed by applying a second electrode active material, such as a transition metal oxide, to a second electrode collector plate formed of a metal foil, such as aluminum or an aluminum alloy, and may include a second electrode tab (E.G., a second uncoated part), that is, an area to which the second electrode active material has not been applied.

The separator 30 may prevent a short-circuit between the first electrode plate 10 and the second electrode plate 20 while permitting movement of lithium ions therebetween. The separator 30 may include (or may be composed of) a polyethylene film, a polypropylene film, or a polyethylene-polypropylene film, for example.

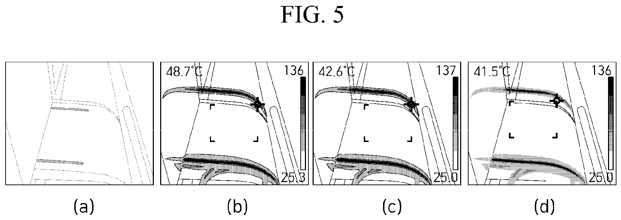

FIG. 5 is illustrates a temperature change of an uncoated part attributable to a fine movement of an electrode plate during induction heating annealing (IHA) by an apparatus for pressing an electrode plate.

Referring to FIG. 5(a), an apparatus for pressing an electrode plate may perform induction heating annealing (IHA) to prevent a phenomenon in which an electrode plate is broken due to a difference in pressure applied to a coating part of the electrode plate and to an uncoated part thereof.

Referring to FIGS. 5(b) to 5(d), while the IHA is performed, the electrode plate may be finely moved (e.g., slightly moved) in the left and right direction (e.g., a widthwise of lateral direction) thereof. Accordingly, the temperature of the uncoated part may vary (or may be changed) because the location of the IHA for the electrode plate changes.

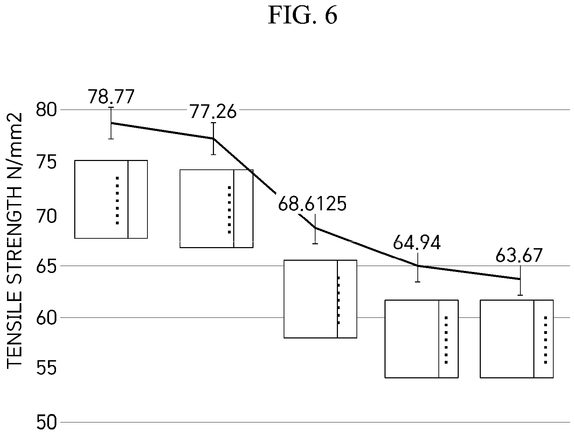

FIG. 6 is a graph describing a change in the tensile strength of the uncoated part of the electrode plate according to a change in the location of IHA for the electrode plate.

Referring to FIG. 6, the tensile strength of the uncoated part is reduced as the location of IHA moves from the coating part toward the uncoated part. For example, tensile strength of the uncoated part may be reduced and the elongation rate of foil may be increased because the crystal size of the foil at the uncoated part is increased only when the IHA is accurately performed to the uncoated part.

However, as described with reference to FIG. 5, the electrode plate may be finely moved in the left and right direction while the IHA is performed. Accordingly, continuous performance of the IHA on the uncoated part is difficult because the location at which the IHA is performed on the electrode plate changes (or varies). As a result, it is difficult to obtain the electrode plate having desired quality.

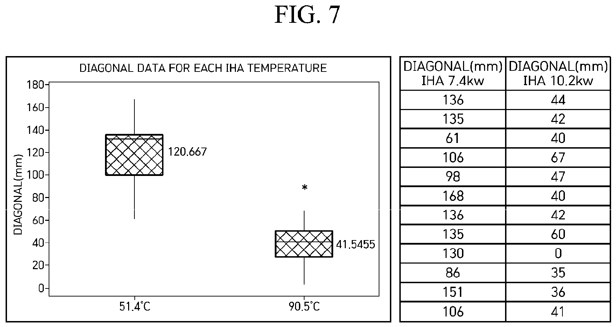

FIG. 7 is a table and graph describing a change in the physical properties of the electrode plate according to a temperature change of the uncoated part of the electrode plate.

FIG. 7 illustrates a change in the physical properties of the electrode plate when the temperature of the uncoated part changes due to the fine movement of the electrode plate as described above with respect to FIG. 5. The graph in FIG. 7 illustrates a degree to which the electrode plate diagonally moves from left to right depending on a temperature change of the uncoated part. Referring to FIG. 7, a diagonal change of the electrode plate is relatively great when the temperature is 51.4°C and 90.5°C. Accordingly, if IHA is not performed on the uncoated part of the electrode plate at a reference temperature, the diagonal change of the electrode plate is greatly increased.

As described above with reference to FIGS. 5 to 7, if the temperature of the uncoated part of the electrode plate is not constantly maintained, the quality of the electrode plate cannot be stably maintained because tensile strength of the electrode plate or the physical properties of the electrode plate vary.

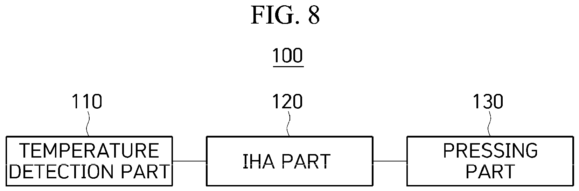

Hereinafter, an apparatus for pressing an electrode plate according to an embodiment of the present disclosure is described with reference to FIGS. 8 to 10.

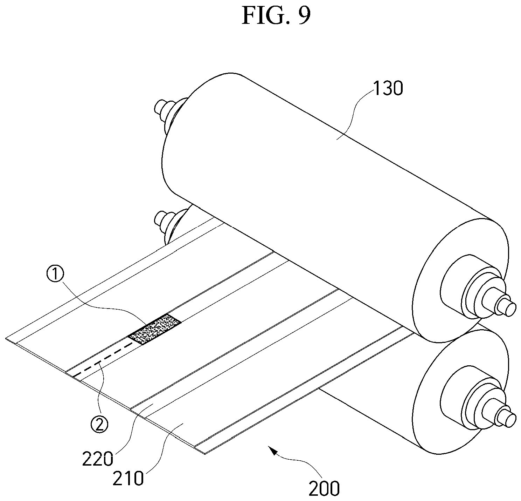

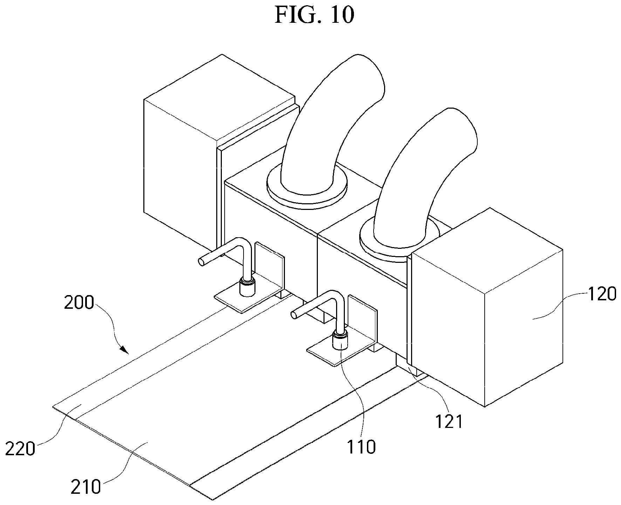

FIG. 8 is a diagram describing an apparatus for pressing an electrode plate according to an embodiment of the present disclosure. FIG. 9 illustrates a process of, by the apparatus for pressing an electrode plate according to an embodiment of the present disclosure, performing IHA. FIG. 10 illustrates a temperature detection part and IHA part of the apparatus for pressing an electrode plate according to an embodiment of the present disclosure.

Referring to FIG. 8, the apparatus 100 for pressing an electrode plate, includes a temperature detection part (e.g., a temperature detector) 110, an induction heating annealing (IHA) part 120, and a pressing part 130. The apparatus for pressing an electrode plate 100 illustrated in FIGS. 9 and 10 may be an embodiment. The components of the apparatus 100 for pressing an electrode plate according to an embodiment of the present disclosure may not be limited to the embodiment illustrated in FIGS. 9 and 10. Some of the components of the apparatus 100 may be changed or omitted or a component may be added to the apparatus 100.

Referring to FIG. 9, the apparatus 100 for pressing an electrode plate according to an embodiment of the present disclosure may press an electrode plate 200. The electrode plate 200 may have a coating part (e.g., a coated region) 210 having an active material coated on one surface thereof and an uncoated part (e.g., an uncoated region) 220 having no active material coated thereon and formed to adjoin the coating part 210.

The temperature detection part 110 detects the temperature of the uncoated part 220. In an embodiment, the temperature detection part 110 may detect the temperature of the uncoated part 220 in real time during a pressing process. The temperature detection part 110 may be a temperature sensor configured to measure the temperature of a portion to be measured in a contactless way. For example, the temperature detection part 110 may be an infrared temperature sensor.

The IHA part 120 performs IHA on the uncoated part 220 so that the temperature of the uncoated part 220, which has been detected by the temperature detection part 110, is maintained within a reference (or predetermined) range of temperatures. Accordingly, breakage of the electrode plate may be mitigated or prevented and stable quality ensured because the temperature of the uncoated part can be maintained in an optimal temperature range even if electrode plate moves. In an embodiment, the IHA part 120 may control the location and/or output of IHA based on a temperature of the uncoated part 220, which is detected by the temperature detection part 110. Thus, by allowing control of location and/or output of IHA, the temperature of the uncoated part can be maintained. In such an embodiment, the IHA part 120 may set the temperature of the uncoated part 220 to be within a range in which the uncoated part 220 is not modified by a reference degree. For example, the IHA part 120 may set a temperature of the uncoated part 220 to be in a range of about 25°C to about 200°C, preferably 30°C to about 100°C, more preferably 40°C to 60°C. Furthermore, the IHA part 120 may set a temperature range of the uncoated part 220 to about ±3°C. In another example, the IHA part 120 may set a temperature range of the uncoated part 220 to about ±2°C or ±1°C. For example, the IHA part 120 may set a range of a temperature to be about 50°C±3°C.

As described above, the location of the electrode plate 200 may be slightly moved due to fine adjustment. In this case, referring to FIG. 9, the temperature detection part 110 may detect the temperature of the uncoated part 220 (①). The IHA part 120 may control the location and/or output, e.g. the output or heating strength, of IHA based on a temperature change that is detected by the temperature detection part 110 (②). For example, the IHA part 120 may control the location and/or output, e.g. the output strength, of IHA based on detecting that the temperature is outside the reference range. The IHA part 120 may then control the location and/or output, e.g. the output strength, until the temperature detected by the temperature detection part 110 is inside the reference range. The IHA part 120 may control the location of the IHA in an X axis or a Z axis direction, i.e., by planar and/or vertical movement. In an embodiment, the IHA part 120 may include a control part (e.g., a controller) that controls the location and output of IHA and/or may communicate with a control part (e.g., a controller) by being connected to the control part in a wired or wireless way.

Referring to FIG. 10, the temperature detection part 110 may be connected to the IHA part 120. When the temperature detection part 110 detects the temperature of the uncoated part 220, the IHA part 120 may control the location and output of IHA by moving an IHA part head 121 which performs the IHA. In an embodiment, the temperature detection part 110 may be disposed in succession, for example at a location in a range of about 10 mm to about 20 mm, from a location (e.g., in front of a location) at where the IHA part 120 performs the IHA in the direction in which the electrode plate 200 is moved. Accuracy of the temperature detection may be increased by the positioning, i.e. short distance, for improving accuracy of location and/or output control of IHA.

The pressing part 130 may press the electrode plate 200 in which the uncoated part 220 has been heated by the IHA part 120. In an embodiment, the pressing part 130 may include a pair of press rollers that are disposed to face each other. The electrode plate 200 may be pressed by the pair of press rollers of the pressing part 130. Accordingly, the electrode plate 200 may be elongated in the direction in the movement direction of the electrode plate 200.

A method of pressing an electrode plate by using the apparatus for pressing an electrode plate 100 having the aforementioned structure is described below. The method may include all steps derivable from the above described apparatus which is included herein in the following.

According to an embodiment of the method of pressing an electrode plate, the temperature detection part 110 may detect the temperature of the uncoated part 220. In an embodiment, the temperature detection part 110 may be disposed at a location in a range of about 10 mm to about 20 mm from a location at which the IHA part 120 performs the IHA in the direction in which the electrode plate 200 is moved.

The IHA part 120 may perform IHA on the uncoated part 220 so that the temperature of the uncoated part 220, which is detected by the temperature detection part 110, is maintained within a reference range of temperatures. In an embodiment, the IHA part 120 may control the location and output of the IHA based on the temperature detected by the temperature detection part 110. In such an embodiment, the IHA part 120 may set a temperature to be in a range of about 25°C to about 200°C preferably 30°C to about 100°C, more preferably 40°C to 60°C, and/or may set a range of temperatures to be about ±3°C, to about ±2°C or to about ±1°C. For example, the IHA part 120 may set a range of a temperature to be about 50°C±3°C.

Thereafter, the pressing part 130 may press the electrode plate 200 in which the uncoated part 220 has been heated by the IHA part 120.

Hereinafter, materials which may be used in the electrode plate 200 that is pressed by the apparatus 100 for pressing an electrode plate according to an embodiment of the present disclosure are described.

A compound (e.g., a lithiated intercalation compound) capable of reversible intercalation and deintercalation of lithium may be used as a positive electrode active material. For example, one type or more selected from among complex oxides of metal, selected from among cobalt, manganese, nickel, and a combination of them, and lithium may be used as the positive electrode active material.

The complex oxide may be lithium transition metal complex oxide. A detailed example of the complex oxide may include lithium nickel-based oxide, lithium cobalt-based oxide, lithium manganese-based oxide, a lithium ferrous phosphate-based compound, cobalt-free nickel-manganese-based oxide, or a combination of them.

For example, a compound that is represented as one of the following chemical formulas may be used. LiₐA_{1-b}X_{b}O_{2-c}Dₑ (0.90≤a≤1.8, 0≤b≤0.5, 0≤c≤0.05); LiₐMn_{2-b}X_{b}O_{4-c}D_{c} (0.90≤a≤1.8, 0≤b≤0.5, 0≤c≤0.05); LiₐNi_{1-b-c}Co_{b}X_{c}O_{2-α}D_{α} (0.90≤a≤1.8, 0≤b≤0.5, 0≤c≤0.5, 0<α<2); LiₐNi_{1-b-c}Mn_{b}X_{c}O_{2-α}D_{α} (0.90≤a≤1.8, 0≤b≤0.5, 0≤c≤0.5, 0<α<2); LiₐNi_{b}Co_{c}L¹_{d}GₑO₂ (0.90≤a≤1.8, 0≤b≤0.9, 0≤c≤0.5, 0≤d≤0.5, 0≤e≤0.1); LiₐNiG_{b}O₂ (0.90≤a≤1.8, 0.001≤b≤0.1); LiₐCoG_{b}O₂ (0.90≤a≤1.8, 0.001≤b≤0.1); LiₐMn_{1-b}G_{b}O₂ (0.90≤a≤1.8, 0.001≤b≤0.1); LiₐMn₂G_{b}O₄ (0.90≤a≤1.8, 0.001≤b≤0.1); LiₐMn_{1-g}G_{g}PO₄ (0.90≤a≤1.8, 0≤g≤0.5); Li_{(3-f)}Fe₂(PO₄)₃ (0≤f≤2); and LiₐFePO₄ (0.90≤a≤1.8).

In the chemical formula, A may be Ni, Co, Mn, or a combination of them. X may be Al, Ni, Co, Mn, Cr, Fe, Mg, Sr, V, a rare earth element, or a combination of them; D may be O, F, S, P, or a combination of them. G may be Al, Cr, Mn, Fe, Mg, La, Ce, Sr, V, or a combination of them. L¹ may be Mn, Al, or a combination of them.

A positive electrode for a lithium secondary battery may include a current collector and a positive electrode active material layer formed on the current collector. The positive electrode active material layer may include the positive electrode active material and may further include a binder and/or a conductive material.

Content of the positive electrode active material may be in a range of about 90 wt.% to about 99.5 wt.% with respect to the positive electrode active material layer 100 wt.%. Content of the binder and the conductive material may be in a range of about 0.5 wt.% to about 5 wt.% with respect to the positive electrode active material layer 100 wt.%.

Al may be used as the current collector, but the present disclosure may not be limited thereto.

A negative electrode active material may include a material capable of reversible intercalation/de-intercalation with respect to lithium ions, lithium metal, an alloy of lithium metal, a material capable of doping and dedoping with respect to lithium, or transition metal oxide.

The material capable of reversibly Intercalation/de-intercalation with respect to lithium ions may include a carbon-based negative electrode active material, for example, crystalline carbon, amorphous carbon, or a combination of them. An example of the crystalline carbon may include graphite, such as natural graphite or synthetic graphite. Examples of the amorphous carbon may include soft or hard carbon, mesophase pitch carbide, and fired coke.

An Si-based negative electrode active material or an Sn-based negative electrode active material may be used as the material capable of doping and dedoping with respect to lithium. The Si-based negative electrode active material may be silicon, a silicon-carbon composite, SiOₓ (0<x<2), a Si-based alloy, or a combination of them.

The silicon-carbon composite may be a composite of silicon and amorphous carbon. According to an implementation example, the silicon-carbon composite may include silicon particles, and may have a form in which amorphous carbon has been coated on surfaces of silicon particles.

The silicon-carbon composite may further include crystalline carbon. For example, the silicon-carbon composite may include a core including crystalline carbon and silicon particles, and an amorphous carbon coating layer disposed on a surface of the core.

A negative electrode for a lithium secondary battery may include a current collector and a negative electrode active material layer disposed on the current collector. The negative electrode active material layer may include the negative electrode active material and may further include a binder and/or a conductive material.

For example, the negative electrode active material layer may include the negative electrode active material in a range of about 90 wt.% to about 99 wt.%, the binder in a range of about 0.5 wt.% to about 5 wt.%, and the conductive material in a range of about 0 wt.% to about 5 wt.%.

A nonaqueous-based binder, an aqueous-based binder, a dry binder, or a combination of them may be used as the binder. If the aqueous-based binder is used as a binder for the negative electrode, the binder for the negative electrode may further include a cellulose-series compound capable of assigning viscosity.

One selected from among nickel foil, stainless steel foil, titanium foil, nickel foam, copper foam, a polymer base on which a conductive metal has been coated, and a combination of them may be used as a current collector for the negative electrode.

An electrolyte for a lithium secondary battery may include a nonaqueous organic solvent and lithium salts.

The nonaqueous organic solvent may act as a medium through which ions that are involved in an electrochemical reaction of a battery can move.

The nonaqueous organic solvent may be a carbonate-based, ester-based, ether-based, ketone-based, or alcohol-based solvent, an aprotic solvent, or a combination of them. The carbonate-based, ester-based, ether-based, ketone-based, or alcohol-based solvent, or the aprotic solvent may be used solely, or two types or more of them may be mixed and used as the nonaqueous organic solvent.

Furthermore, if the carbonate-based solvent is used, annular carbonate and chain carbonate may be mixed and used.

A separator may be present between the positive electrode and the negative electrode depending on the type of lithium secondary battery. The separator may include (or may be) polyethylene, polypropylene, and polyvinylidene fluoride, or a multi-layer having two or more layers thereof.

The separator may include a porous base and a coating layer including an organic matter, an inorganic matter, or a combination of them disposed on one or both sides of the porous base.

The organic matter may include a polyvinylidene fluoride-based heavy antibody or (meth)acrylic polymer.

The inorganic matter may include inorganic particles selected among Al₂O₃, SiO₂, TiO₂, SnO₂, CeO₂, MgO, NiO, CaO, GaO, ZnO, ZrO₂, Y₂O₃, SrTiO₃, BaTiO₃, Mg(OH)₂, boehmite, and a combination of them, but the present disclosure is not limited thereto.

The organic matter and the inorganic matter may have a form in which the organic matter and the inorganic matter have been mixed in one coating layer or a form in which a coating layer including the organic matter and a coating layer including the inorganic matter have been stacked.

Although the present disclosure has been described above in connection with the some embodiments, the present disclosure is not limited to the described embodiments.

### Description of Some Reference Numerals

| | | | |
|---|---|---|---|
| 1: | secondary battery | 10: | first electrode plate |
| 11: | first electrode lead tab | 12: | first electrode terminal |
| 20: | second electrode plate | 21: | second electrode lead tab |
| 22: | second electrode terminal | 30: | separator |
| 40: | electrode assembly | 50: | case |
| 60: | sealing member | 70: | electrode tab |
| 71: | first electrode tab | 72: | second electrode tab |
| 100: | electrode plate pressing device | 110 : | temperature detection part |
| 120: | IHA part | 130 : | pressing part |

## Claims

1. An apparatus (100) for pressing an electrode plate (200), the electrode plate (200) comprising a coating part (210) having an active material coated on one surface thereof and an uncoated part (220) without an active material coated thereon adjoining the coating part (210), the apparatus (100) comprising:
a temperature detector (110) configured to detect a temperature of the uncoated part (220);
an induction heating annealing, IHA, part (120) configured to perform IHA on the uncoated part (220) so that the temperature of the uncoated part (220) detected by the temperature detector (110) is maintained within a reference range of a reference temperature; and
a pressing part (130) configured to press the electrode plate (200) after the uncoated part (220) has been heated by the IHA part (120).

2. The apparatus (100) of claim 1, wherein the IHA part (120) is configured to control a location and/or an output of the IHA based on the temperature of the uncoated part (220) detected by the temperature detector (110).

3. The apparatus (100) of claim 2, wherein the IHA part (120) is configured to control the location and/or the output of the IHA based on the temperature detected by the temperature detector (110) being outside the reference range until the temperature detected by the temperature detector (110) is inside the reference range.

4. The apparatus (100) of one of the claims 2 to 3, wherein the IHA part (120) includes a movable IHA part head (121) for performing the IHA, and the IHA part (120) is configured to control the location of the IHA and/or the output of the IHA by movement of the IHA part head (121).

5. The apparatus (100) of claim **4,** wherein the movement includes a planar movement and/or a vertical movement.

6. The apparatus (100) of one of the claims 1 to 5, wherein the reference temperature is in a range of 25°C to 200°C.

7. The apparatus (100) of one of the claims 1 to 6, wherein the reference range of the reference temperature is ±3°C.

8. The apparatus (100) of one of the claims 1 to 7, wherein the temperature detector (110) is arranged in front of a location at where the IHA part (120) performs the IHA in a direction in which the electrode plate (200) is moved.

9. The apparatus (100) of claim 8, wherein the temperature detector (110) is arranged in a range of 10 mm to 20 mm in front of the location at where the IHA part (120) performs the IHA in a direction in which the electrode plate (200) is moved.

10. The apparatus (100) of one of the claims 1 to 9, wherein the temperature detector (110) is configured to detect the temperature of the uncoated part (220) in contactless way.

11. A method of pressing an electrode plate, the electrode plate (200) comprising a coating part (210) having an active material coated on one surface thereof and an uncoated part (220) without an active material coated thereon adjacent to the coating part (210), the method comprising:
detecting, by a temperature detector (110), a temperature of the uncoated part (220);
performing, by an induction heating annealing, IHA, part (120), IHA on the uncoated part (220) so that the temperature of the uncoated part (220) detected by the temperature detector is maintained within a reference range of a reference temperature; and
pressing, by a pressing part (130), the electrode plate (200) after the uncoated part (220) has been heated by the IHA part (120).

12. The method of claim 11, wherein the performing the IHA comprises controlling, by the IHA part (120), a location and/or an output of the IHA based on the temperature of the uncoated part (220) detected by the temperature detector (110).

13. The method of one of the claims 11 to 12, wherein the performing the IHA comprises setting, by the IHA part (120), the reference temperature in a range of 25°C to 200°C.

14. The method of one of the claims 11 to 13, wherein the performing the IHA comprises setting, by the IHA part (120), the reference range of the reference temperature to be ±3°C.

15. The method of one of the claims 11 to **14,** wherein the temperature detector is in a range of 10 mm to 20 mm in front of a location at where the IHA part (120) performs the IHA in a direction in which the electrode plate (200) is moved.
